# FASCICULE DE BREVET EUROPEEN

(11) **EP 3 643 057 B1**
(45) Date de publication et mention de la délivrance du brevet: **24.03.2021**
(21) Numéro de dépôt: 18737339.4
(22) Date de dépôt: 12.06.2018
(51) Int. Cl.: H04M 3/493, H04M 7/00

(54) **PROCÉDÉ D'ÉTABLISSEMENT D'UNE COMMUNICATION AVEC UN SERVEUR INTERACTIF**
VERFAHREN ZUM AUFBAU EINER KOMMUNIKATION MIT EINEM INTERAKTIVEN SERVER
METHOD FOR ESTABLISHING A COMMUNICATION WITH AN INTERACTIVE SERVER

(30) Priorité: 19.06.2017 FR 1755581
(43) Date de publication de la demande: 29.04.2020
(73) Titulaire: ORANGE, 75015 Paris (FR)
(72) Inventeur: TOUTAIN, François, 92326 Ch tillon Cedex (FR); LE HUEROU, Emmanuel, 92326 Ch tillon Cedex (FR); BEAUFILS, Eric, 92326 Ch tillon Cedex (FR)
(86) Numéro de dépôt international: PCT/FR2018/051358
(87) Numéro de publication internationale: WO 2018/234655

(56) Documents cités:
- EP-A1- 1 701 527
- US-A1- 2003 063 728
- US-A1- 2017 149 844
- US-B1- 8 914 850

## Description

### Domaine technique

La demande d'invention se situe dans le domaine des télécommunications et plus particulièrement dans le domaine des communications avec un serveur interactif.

### Art antérieur

Un serveur vocal interactif (IVR en anglais, pour Interactive Voice Response) est un serveur informatique capable d'établir des communications téléphoniques avec un appelant et d'exécuter certaines actions selon des commandes envoyées par le terminal appelant et selon une logique de service pour laquelle il est programmé. De manière classique, un IVR peut accéder à des bases de données et communiquer des informations à un terminal appelant en utilisant par exemple un dispositif de synthèse vocale. Un IVR propose généralement une arborescence de rubriques au travers desquelles un terminal peut naviguer en transmettant des commandes. Les commandes peuvent être transmises par des codes DTMF (Dual-Tone Multi-Frequency) ou par des mots clefs prononcés par l'utilisateur du terminal.

L'usage d'un serveur vocal pour obtenir des renseignements est parfois fastidieux. Il peut arriver par exemple qu'un serveur vocal demande à l'appelant de saisir un numéro client composé par exemple de chiffres et de lettres. Un tel code peut difficilement être saisi à partir d'un pavé numérique d'un téléphone. Pour pallier à cet inconvénient, de nombreux IVR proposent aux utilisateurs d'épeler les différents caractères constituant le code. Le serveur met en œuvre un algorithme de reconnaissance vocale pour déterminer les chiffres ou les lettres prononcés. Lorsque l'environnement est bruyant, une telle manière de faire conduit parfois à une reconnaissance erronée du code par le serveur vocal et l'utilisateur peut être amené à épeler de nouveau le code.

On assiste aujourd'hui à l'émergence d'agents conversationnels capable de dialoguer avec des utilisateurs par le biais d'une messagerie instantanée. Ces agents conversationnels (ChatBot en anglais), sont mis en œuvre par des serveurs informatiques capables d'interpréter des commandes ou des phrases en langage naturel envoyées par un terminal et d'y réagir en communiquant des informations ou en réalisant des actions. Certains agents conversationnels sont capables par exemple de répondre à des questions relatives à la météo en fournissant des prévisions selon des questions posées par des utilisateurs. Tout comme un IVR, un Chatbot réagit à des mots clefs ou des phrases transmis par messagerie instantanée selon une logique de service pour laquelle il est programmé.

De nombreuses entreprises mettent à disposition de leurs clients des serveurs vocaux de type IVR afin de réduire les coûts engendrés par un centre d'appel. Ces mêmes entreprises mettent parfois à disposition de leurs clients des « conseillers virtuels » qui permettent à des utilisateurs de poser des questions et d'obtenir des renseignements en envoyant des messages instantanés vers une adresse particulière. Un Chatbot surmonte l'inconvénient des serveurs vocaux lorsqu'il s'agit de saisir des caractères, comme un mot de passe ou un numéro client par exemple car une interface de messagerie instantanée est conçue pour être utilisée avec un clavier permettant de saisir toute sorte de caractères.

Malgré tout, une communication écrite avec un assistant virtuel nécessite une attention particulière. Il est délicat par exemple de dialoguer par écrit avec un agent conversationnel en marchant dans la rue, alors que la consultation vocale d'un IVR peut se faire facilement en marchant.

Un utilisateur doit donc choisir la modalité au travers de laquelle il va communiquer avec un service client automatisé d'une entreprise en fonction des informations qu'il devra communiquer et du contexte dans lequel il communique. Il arrive souvent que le contexte dans lequel un utilisateur accède à un tel service ne lui permette pas de le contacter. Il arrive également que le contexte dans lequel l'utilisateur évolue varie au cours du temps pour un même service.

Il existe donc un besoin pour qu'un utilisateur puisse communiquer avec un service de consultation distant de façon confortable et d'une manière qui soit adaptée au contexte dans lequel l'utilisateur accède au service

Par exemple, US2017149844 concerne la basculement entre des communications ayant des modalités différentes, où le contexte des communications est préservé.

Une solution est proposée pour améliorer la situation.

### Résumé de l'invention

A cet effet, il est proposé un procédé selon la revendication 1.

Le comportement du serveur interactif est défini par un nombre fini d'états et par les transitions qui permettent le passage d'un état à l'autre. Il met par exemple en œuvre un automate fini susceptible d'être dans un nombre fini d'états, un seul état à la fois. L'état dans lequel se trouve l'automate est appelé « état courant ». Le passage d'un état à un autre est conditionné par un événement tel que par exemple la réception d'un message en provenance d'un terminal, ou la détection d'un évènement relatif à un service demandé par le terminal. Ce changement d'état est appelé « transition ». Un automate particulier est défini par l'ensemble de ses états et par les conditions des transitions.

Un tel automate est par exemple défini par une description au format VoiceXML standardisé par le *VoiceXML Forum* et reconnu par le W3C. Un exemple de description au format VoiceXML est donné en annexe.

Une première communication est établie entre un serveur interactif et un terminal. Le terminal peut commander le serveur interactif par l'envoi de commandes. Les commandes peuvent être des codes DTMF (Dual tone Multi Frequency) transmis dans des messages conformes à la modalité de la communication. Les commandes peuvent aussi être envoyées sous forme de mots clefs prononcés par l'utilisateur et transmis sous la forme d'un signal audio codé, ou encore des mots clefs transmis sous forme de texte, selon la modalité de la communication.

La réception de telles commandes provoque des changements d'état de l'automate régissant le comportement du serveur. Les réponses du serveur aux commandes reçues sont transmises au terminal selon un format adapté à la modalité de la communication. Par exemple, dans le cas d'une communication vocale, le serveur transmet un signal de parole synthétisé ou préenregistré adapté pour être restitué par un haut-parleur du terminal.

A la réception d'une commande particulière, le serveur interactif mémorise un contexte comprenant par exemple au moins l'état courant de l'automate qui régit son comportement, ainsi qu'une identité publique. Une identité publique est une adresse qui permet de contacter un terminal ou un ensemble de terminaux associés à cette identité. L'identité publique est par exemple le numéro de téléphone, une adresse de contact ou une adresse SIP (Session Initiation Protocol) du terminal avec lequel la première communication est établie. L'identité publique peut également être associée à un autre terminal de l'utilisateur, ou être partagée par une pluralité de terminaux. Le contexte peut également comprendre d'autres données, comme par exemple des données qui ont été transmises par le terminal en réponse à des requêtes émises par le serveur. Par exemple, le contexte peut comprendre un numéro client ou un numéro de téléphone transmis par le terminal au cours de la conversation.

Le contexte mémorisé comprend ainsi les données nécessaires pour configurer l'automate dans l'état dans lequel il était au moment de la mémorisation.

Le serveur établit ensuite une communication avec le terminal désigné par l'identité publique mémorisée selon une seconde modalité et utilise le contexte mémorisé pour configurer la nouvelle communication.

De cette façon, le procédé permet l'établissement d'une nouvelle communication selon une modalité différente de la première communication. La nouvelle communication est configurée avec les données de contexte mémorisées. De cette façon, l'utilisateur du terminal peut poursuivre l'interaction débutée avec le serveur interactif en utilisant la nouvelle modalité. L'utilisateur du terminal n'est pas obligé de reprendre l'interaction depuis l'état initial de l'automate. Le terminal avec lequel la seconde communication est établie peut être le terminal avec lequel la première communication est établie.

Ainsi, il est possible pour un utilisateur de changer la modalité d'une communication avec un service interactif sans en perdre le contexte.

Selon un mode de réalisation particulier, l'étape de configuration comprend une étape de transmission vers le terminal destinataire, via la seconde communication et sous une forme adaptée à la seconde modalité, d'au moins une partie du contexte mémorisé.

De cette façon, l'utilisateur du terminal destinataire est informé via la seconde communication et selon une seconde modalité, de l'état dans lequel se trouve le serveur interactif lorsqu'il poursuit l'interaction depuis une interface adaptée à la seconde modalité. Par exemple, le serveur peut transmettre via la seconde communication le dernier message transmis via la première communication. Ainsi, l'utilisateur peut facilement poursuivre l'interaction en utilisant la communication établie selon la seconde modalité, cette donnée permettant par exemple au terminal de restituer une information de contexte représentative des échanges ayant eu lieu sur la première communication. Par exemple, le terminal destinataire peut afficher le dernier message transmis par le serveur sur la première communication.

Selon une réalisation particulière, le procédé est tel que le contexte mémorisé comprend au moins un historique des états successivement occupés par le serveur interactif au cours de la première communication et un historique des transitions ayant mené à ces états.

Le contexte comprend l'historique des états successifs de l'automate régissant le comportement du serveur, et/ou des transitions ayant provoqué ces changements d'états. Le serveur peut transmettre ce contexte au terminal destinataire de la seconde communication. Le terminal est alors capable de restituer sur une interface associée à la seconde communication, l'historique des états depuis le début de la première communication. Une telle disposition permet par exemple au terminal recevant un message comprenant le contexte mémorisé de restituer l'historique d'une navigation de l'utilisateur dans l'arborescence du serveur interactif.

Selon un mode particulier de réalisation, la première communication est établie selon une modalité vocale, la seconde communication étant établie selon une modalité textuelle.

La première communication est établie selon une modalité vocale. Il s'agit par exemple d'un appel téléphonique vers un serveur interactif vocal. Lorsque le serveur détermine que l'établissement d'une seconde communication est souhaitable, par exemple à la réception d'une commande particulière en provenance du terminal, une seconde communication selon une modalité textuelle est établie vers le terminal désigné par l'identité publique mémorisée. Par exemple, la seconde communication est une communication de messagerie instantanée conforme au standard RCS (Rich Communication suite). Le serveur peut ainsi envoyer un message textuel récapitulatif des différents choix effectués par l'utilisateur au cours de la première communication. Le message peut alors être affiché dans l'interface de communication RCS du terminal pour renseigner l'utilisateur sur l'état du serveur interactif, les éventuelles commandes attendues et les choix faits par l'utilisateur au cours de la communication vocale.

Selon un mode particulier de réalisation, le procédé comporte une étape d'adaptation du contexte à la modalité de la seconde communication. Par exemple, les données de contexte mémorisées sont transformées en un message textuel compréhensible par un humain et adapté pour être affiché dans une interface de messagerie instantanée.

Selon une réalisation particulière, le procédé est tel que la première communication est établie selon une modalité textuelle, la seconde communication étant établie selon une modalité vocale.

Une communication est initialement établie selon une modalité textuelle. Il s'agit par exemple d'une communication établie selon un protocole de messagerie instantanée tel que RCS avec un serveur interactif adapté pour échanger des messages textuels, tel que par exemple un chatbot.

Une communication établie selon une modalité textuelle permet par exemple d'échanger des messages écrits tels que des messages instantanés ou des SMS. De tels messages peuvent en outre contenir des contenus non textuels, comme des images, des éléments de mise en forme du texte ou des interfaces utilisateur.

Une communication établie selon une modalité vocale permet l'échange de flux audio compressés entre les correspondants. Il s'agit par exemple d'une communication téléphonique bidirectionnelle classique ou d'une communication établie conformément à un protocole de messagerie instantané. Une telle communication permet l'échange de commandes sous la forme de DTMF « inband », c'est-à-dire transmise sous la forme d'un signal audio, ou « outband », c'est-à-dire transmise dans la signalisation par exemple. La norme IETF RFC 4733 défini par exemple un format pour les DTMF « outband ».

La seconde communication établie lorsque le serveur détermine que l'établissement d'une seconde communication est souhaitable, par exemple par la réception d'une commande en provenance du terminal suite à la réception d'une commande en provenance du terminal est une communication vocale. Le serveur peut établir une telle seconde communication à partir de l'identité publique mémorisée. L'identité publique est par exemple communiquée par la signalisation d'appel échangée lors de l'établissement de la première communication ou transmise par le terminal par un message dédié.

Le contexte mémorisé est transmis au terminal via la communication vocale. Pour cela, le serveur peut générer un signal de parole de synthèse qui récapitule vocalement les interactions ayant eu lieu entre le terminal et le serveur au cours de la première communication établie selon une modalité textuelle.

De cette façon, l'utilisateur du terminal connaît l'état du service lorsqu'il poursuit la communication selon la modalité vocale.

L'utilisateur d'un terminal peut ainsi basculer d'une modalité textuelle vers une modalité vocale, ou inversement, selon le contexte dans lequel il communique et selon les données demandées par le serveur.

Selon un mode particulier de réalisation, le procédé comprend une étape de contrôle qu'une communication selon une seconde modalité est possible entre le serveur et le terminal destinataire.

De cette façon, le ne procédé ne permet l'établissement de la seconde communication uniquement si le terminal supporte la modalité dans laquelle elle doit être établie.

Pour cela, le serveur peut envoyer au terminal désigné par l'identité publique mémorisée un message permettant d'obtenir en retour les capacités de communication du terminal. Les capacités peuvent également être reçues par le serveur au moment de l'établissement de la première communication. De cette façon le serveur ne tente pas d'établir une communication selon une modalité non supportée par le terminal destinataire.

Selon un mode de réalisation particulier, le procédé est tel que la première communication est maintenue suite à l'établissement de la seconde communication, et que les messages émis par le serveur sont transmis via la première et la seconde communication.

Les première et seconde communications sont actives simultanément et les messages transmis sur une communication le sont également sur l'autre communication. De cette façon, l'utilisateur peut utiliser indifféremment l'une ou l'autre des communications pour interagir avec le service, passer d'une communication à l'autre, les messages vocaux transmis par le serveur sur une communication vocale étant également transmis sous une forme adaptée sur la communication textuelle.

Selon une réalisation particulière, la seconde communication est établie avec un terminal destinataire distinct du terminal avec lequel la première communication est établie.

Lorsque l'identité publique mémorisée est différente de l'identité publique associée au terminal avec lequel la première communication est établie, ou bien lorsque l'identité publique mémorisée est partagée par une pluralité de terminaux, la seconde communication peut être établie avec un terminal destinataire distinct. L'utilisateur du service interactif peut alors sélectionner un terminal particulièrement adapté à la modalité de la seconde communication.

Selon un autre aspect, et de façon correspondante au procédé d'établissement, il est proposé un procédé selon la revendication 8.

L'utilisateur d'un terminal peut ainsi demander à ce qu'une nouvelle communication soit établie selon une nouvelle modalité. Le contexte de l'interaction avec le serveur interactif est conservé d'une communication à l'autre. De cette manière, un utilisateur du terminal peut choisir d'utiliser la modalité la plus adaptée aux conditions dans lesquelles il accède au service. La commande de basculement peut en outre comporter une identité publique vers laquelle réaliser le basculement. Le terminal reçoit et restitue dans une interface adaptée un message comportant des données représentatives des interactions ayant eu lieu avec le serveur. De cette façon, le contexte de la première communication est conservé dans la seconde communication.

Selon encore un autre aspect, il est proposé un dispositif selon la revendication 9. J

Il est également proposé un dispositif selon la revendication 10.

L'invention concerne aussi un serveur interactif comprenant un dispositif d'établissement tel que décrit ci-dessus.

L'invention concerne également un terminal comprenant un dispositif de bascule tel que décrit ci-dessus.

L'invention concerne aussi un programme d'ordinateur comportant les instructions pour l'exécution du procédé d'établissement d'une seconde communication tel que décrit ci-dessus, lorsque le programme est exécuté par un processeur et/ou les instructions pour l'exécution du procédé de bascule.

Enfin, l'invention se rapporte à un support d'informations lisible par un processeur sur lequel est enregistré un programme d'ordinateur comprenant des instructions pour l'exécution des étapes du procédé d'établissement d'une seconde communication tel que décrit ci-dessus et/ou les instructions pour l'exécution du procédé de bascule.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur. D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet. Alternativement, le support d'informations peut être un circuit intégré dans lequel le programme est incorporé, le circuit étant adapté pour exécuter ou pour être utilisé dans l'exécution du procédé en question.

Les différents modes ou caractéristiques de réalisation précités peuvent être ajoutés indépendamment ou en combinaison les uns avec les autres, aux étapes du procédé tel que défini ci-dessus.

Les terminaux, serveurs, dispositifs, programmes et supports d'informations présentent au moins des avantages analogues à ceux conférés par les procédés auxquels ils se rapportent et décrits ci-dessus.

### Liste des figures

D'autres caractéristiques et avantages apparaîtront à la lecture de modes de réalisation préférés décrits en référence aux figures parmi lesquelles :
- La figure 1 illustre un réseau de communication comprenant un serveur interactif accessible depuis un terminal,
- La figure 2 représente les états et les transitions d'un automate fini,
- La figure 3 illustre les principales étapes du procédé d'établissement,
- La figure 4 illustre les principales étapes du procédé de bascule,
- Les figures 5 et 6 représentent des architectures de dispositifs respectivement adaptés pour la mise en œuvre des procédés d'établissement et de bascule.

### Description détaillée

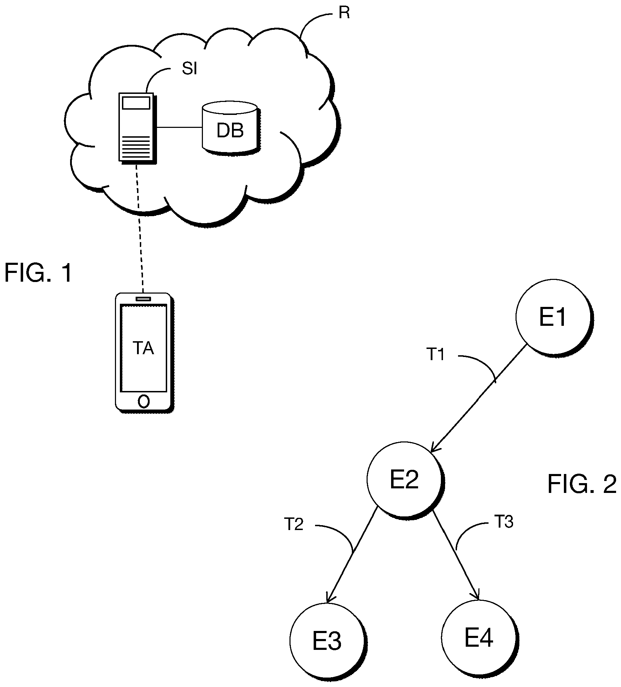

La figure 1 illustre l'architecture d'un réseau de communication adapté pour la mise en œuvre des procédés d'établissement d'une seconde communication et de bascule.

La figure représente un réseau R comprenant un serveur interactif SI. Le réseau R est un réseau de communication, par exemple de type IMS, et permet l'établissement de communications entre des terminaux et des serveurs interactifs. En particulier, le réseau R permet l'établissement de communications selon différentes modalités entre le terminal TA et le serveur SI. Ainsi, des communications vocales, vidéo ou encore textuelles peuvent être établies entre le serveur SI et le terminal TA.

L'invention n'est pas limitée au cadre des réseaux IMS. Le réseau de communication R peut être un réseau de télécommunication GSM (Global System for Mobile communication) permettant l'établissement de communications vocales et l'échange de messages textuels par le biais de SMS (Short Message Service) par exemple.

Le réseau R peut également correspondre à plusieurs réseaux distincts et interconnectés à partir desquels le serveur SI est accessible. Par exemple, le terminal TA peut établir des communications vocales par l'intermédiaire d'un réseau fixe commuté ou un réseau cellulaire et des communications textuelles via un réseau d'accès WiFi, 2G, 3G ou 4G.

Le serveur interactif SI est dans cet exemple un serveur interactif vocal (IVR pour Interactive Voice Response en anglais). Le serveur interactif SI peut en particulier accepter des appels téléphoniques en provenance du terminal TA et répondre à ses requêtes en interrogeant par exemple une base de données DB. Les requêtes sont transmises par le terminal sous la forme de signaux DTMF ou par des mots clefs prononcés par l'utilisateur et interprétés par le serveur suite à une reconnaissance de parole.

Le serveur SI est configuré pour répondre aux requêtes du terminal TA selon une logique de service prédéfinie. Une telle logique de service peut être définie par un fichier de configuration au format VoiceXML. La configuration VoiceXML permet de définir des scénarios d'interactions entre un terminal et un serveur interactif vocal. Un exemple de fichier de description est donné en annexe.

La balise <form> permet ici de configurer le serveur interactif pour qu'il demande au terminal de lui fournir un numéro de client. Un message invitant l'utilisateur du terminal à saisir un numéro de téléphone est défini par la balise <prompt>. Le champ <form> comprend aussi une balise <grammar> contenant un lien vers un fichier de description du format attendu pour le numéro de téléphone. Cette grammaire est utilisée par le serveur pour vérifier la validité de l'information fournie par le terminal en réponse à l'invitation à fournir un numéro de téléphone. La balise <form> comporte enfin une balise <goto> permettant de désigner une section de la description à exécuter lorsque le numéro a été fourni avec succès. En l'espèce, lorsque le terminal a fourni un numéro client correct conforme à la grammaire, la section <menu> est exécutée. Cette section est un menu à partir duquel l'utilisateur peut sélectionner différents choix proposés par le serveur. Une invitation à faire un choix parmi une liste de proposition est définie par la balise <prompt>. Les différents choix possibles sont donnés par les balises <choice>. Selon le choix effectué, l'exécution se poursuivra selon des fichiers de descriptions désignés par l'attribut « next » de la balise <choice>.

Une telle description peut être mise en œuvre dans le serveur SI par un automate fini. La figure 2 illustre les états et les transitions d'un tel automate configuré selon le fichier de description VoiceXML fourni en annexe.

L'état E1 correspond par exemple à la balise <form> identifiée par l'attribut « getClientNumber » du fichier de configuration VoiceXML. Dans cet état, le terminal attend que l'utilisateur fournisse un numéro de client dont le format est conforme à la grammaire désignée par la balise <grammar>.

La réception d'un numéro de client valide provoque une transition T1 de l'état E1 vers l'état E2. Un numéro invalide ne permet pas la transition vers l'état E2.

L'état E2 correspond à la balise <menu> identifiée par l'attribut « selectService» du fichier de configuration VoiceXML. Dans cet état, le terminal attend que l'utilisateur fasse un choix parmi les choix proposés.

La réception d'un message correspondant au choix « Service 1 » par le serveur provoque la transition T2 de l'état E2 vers l'état E3.

L'état E3 correspond à l'état dans lequel se trouve le service interactif suite à la sélection du choix « Service 1 ». Il s'agit par exemple d'un état dans lequel le serveur consulte la base de données DB afin de fournir à l'utilisateur un état de ses consommations téléphoniques.

La réception d'un message correspondant au choix « Service 2» par le serveur provoque la transition T3 de l'état E2 vers l'état E4.

L'état E4 correspond à l'état dans lequel se trouve le service interactif suite à la sélection du choix « Service 2».

Ainsi, la logique de service d'un serveur interactif peut être décrite par un document VoiceXML et mise en œuvre par un automate fini dont les transitions entre états peuvent être commandées par la réception de messages particuliers.

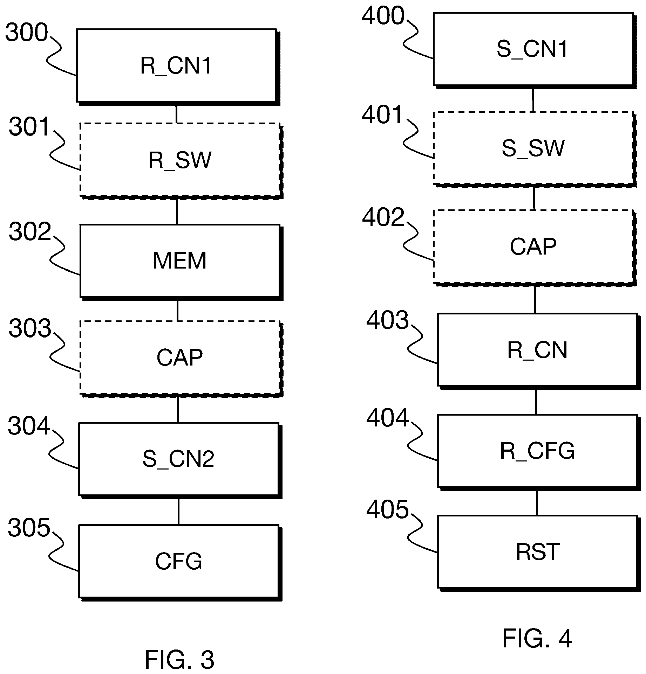

La figure 3 illustre les principales étapes du procédé d'établissement d'une seconde communication réalisées par le serveur SI selon une réalisation particulière. La figure 4 illustre quant à elle les différentes étapes du procédé de bascule réalisées par le terminal TA selon un mode particulier de réalisation.

A l'étape 400, le terminal TA transmet un message d'établissement de communication à destination du serveur interactif SI. Par exemple, le terminal émet un message SIP INVITE pour demander l'établissement d'une communication vocale avec le serveur SI.

Le serveur reçoit la requête d'établissement de communication à l'étape 300 et accepte la communication.

Une communication vocale est alors établie entre le terminal TA et le serveur SI.

Le serveur initialise un automate sur la base d'un document de description du service tel que le document VoiceXML donné en annexe. Il est entendu que ce document VoiceXML est donné à titre purement illustratif et que l'invention s'applique à tout type de service interactif répondant à différentes logiques plus ou moins complexes, et que ces différentes logiques de service peuvent être décrites ou configurées dans le serveur à partir de supports descriptifs autre que VoiceXML, comme par exemple à partir d'un programme d'ordinateur dédié.

Conformément à l'automate décrit en référence à la figure 2, le serveur SI se trouve dans l'état E1 représenté sur la figure 2 suite à l'établissement de la communication vocale. Il transmet alors au terminal une phrase d'annonce invitant l'utilisateur du terminal TA à fournir un numéro de client. Cette annonce est par exemple transmise au travers de la première communication sous la forme d'un signal de parole compressé. Le signal de parole peut avoir été synthétisé à partir du contenu d'une balise <prompt> du fichier VoiceXML ou enregistré au préalable.

Le terminal TA reçoit le message d'annonce et le restitue à l'utilisateur. En réponse à cette invitation à fournir un numéro de client, l'utilisateur compose par exemple les chiffres du numéro demandé sur le clavier du terminal TA. Les chiffres sont encodés sous forme de DTMF et transmis au serveur par l'intermédiaire de la première communication établie. En variante, le serveur SI peut mettre en œuvre un algorithme de reconnaissance de la parole et permettre à l'utilisateur de simplement prononcer les chiffres demandés.

Le serveur peut vérifier que les chiffres reçus correspondent bien aux données attendues à partir de la grammaire désignée dans le document VoiceXML. La réception par le serveur SI d'un numéro de client valide en provenance du terminal provoque une transition de l'état E1 vers l'état E2 dans lequel le serveur est en attente d'un choix de l'utilisateur quant au service auquel il souhaite accéder.

L'utilisateur du terminal TA, par exemple pour des raisons de confidentialité, ne souhaite plus interagir vocalement avec le service offert par le serveur SI.

Le terminal transmet alors, à l'étape 401 une commande de basculement visant à établir une seconde communication selon une seconde modalité. Par exemple, suite à une action de l'utilisateur, le terminal transmet une commande visant à établir une seconde communication selon une modalité textuelle, conforme à un protocole de messagerie instantanée tel que RCS. Une telle commande peut correspondre à un signal DTMF particulier ou un mot clef prononcé transmis dans le canal audio de la première communication.

Le serveur obtient la commande d'établissement d'une seconde communication selon une seconde modalité à l'étape 301.

Selon un mode particulier de réalisation, le basculement est à l'initiative du serveur. Le serveur ne reçoit pas de commande de basculement en provenance du terminal, mais détermine que l'établissement d'une seconde communication selon une seconde modalité est nécessaire. Par exemple le serveur peut déterminer qu'une donnée particulière ne doit pas être transmise selon une modalité vocale pour des raisons de confidentialité. Le numéro client demandé lorsque le serveur est dans l'état E1 peut par exemple être une information confidentielle qui ne doit pas être entendue par des personnes se trouvant à proximité de l'utilisateur. Le serveur peut alors décider d'établir une seconde communication selon une modalité textuelle afin que l'utilisateur puisse saisir le numéro client sans être entendu, en toute confidentialité.

A la réception d'une telle commande, le serveur mémorise à l'étape 302 un contexte représentatif des interactions ayant eu lieu entre le terminal et le serveur interactif au cours de la première communication en association avec un identifiant du terminal, le contexte comprenant au moins un état occupé par le serveur interactif au cours de la première communication.

Le contexte mémorisé comprend en particulier les données fournies par le terminal depuis l'établissement de la communication, comme par exemple le numéro client transmis par le terminal. Le contexte comprend aussi l'état courant de l'automate régissant la logique de service du serveur interactif.

En l'espèce, le contexte comprend une information selon laquelle l'automate est dans l'état E2, le numéro de téléphone associé au terminal TA et le numéro client fourni par le terminal.

Selon un mode de réalisation particulier, le contexte mémorisé comprend au moins un historique des états successivement occupés par le serveur interactif au cours de la première communication et un historique des transitions ayant mené à ces états. Par exemple, lorsque l'étape de mémorisation intervient alors que l'automate est dans l'état E3, le contexte mémorisé peut comprendre les états E1, E2 et E3, les évènements qui ont provoqué les transitions d'un état à l'autre, ainsi que les données saisies par l'utilisateur au cours de la communication.

A l'étape 304, le serveur établit une seconde communication avec le terminal selon une seconde modalité, à partir de l'identité publique mémorisée. Pour cela, le serveur SI envoie un message SIP INVITE à destination du terminal. L'identité publique mémorisée avec le contexte permet de renseigner le champ destinataire du message. Les capacités indiquées dans le message d'établissement de session comprennent les indications nécessaires pour établir une communication selon la seconde modalité souhaitée. Par exemple, le message SIP INVITE comprend une partie SDP (Session Description Protocol) dans laquelle il déclare être en mesure d'établir des communications conformes au standard RCS. Les capacités déclarées dans le message SDP ne comprennent pas de capacités permettant d'établir une communication selon la première modalité. Par exemple, si la première modalité est vocale, le message SDP ne contient pas de capacités vocales. Ainsi, une communication vocale ne peut pas être établie. De cette manière, le procédé permet d'éviter que la seconde communication soit établie selon une modalité similaire à la modalité de la première communication.

Le terminal reçoit la demande d'établissement d'une seconde communication selon une seconde modalité à l'étape 403 et accepte la communication en répondant par un message SIP 200 OK.

Lorsque la seconde communication selon la seconde modalité est établie, le serveur configure la seconde communication à partir du contexte mémorisé à l'étape 305. De cette façon les messages reçus via la seconde communication peuvent provoquer des transitions et des changements d'état dans l'automate du serveur interactif SI. L'utilisateur peut ainsi interagir avec le serveur interactif en utilisant l'une ou l'autre des communications. D'autre part, l'état dans lequel se trouve l'automate au moment de l'établissement de la seconde communication, ainsi que les données déjà renseignées par l'utilisateur sont conservés.

Selon une réalisation particulière, l'étape de configuration comprend une étape de transmission vers le terminal, via la seconde communication et sous une forme adaptée à la seconde modalité, d'au moins une partie du contexte mémorisé.

Pour cela, le serveur SI peut générer un message textuel représentatif de l'état du service interactif au moment de l'établissement de la seconde communication. Par exemple, un tel message peut être généré à partir des balises <prompt> et <choice> du fichier VoiceXML correspondant à l'état E2 du service interactif pour rappeler à l'utilisateur la donnée attendue par le serveur, et transmis au terminal TA via un message instantané émis au travers de la seconde communication. Selon une réalisation particulière, les données déjà communiquées par le serveur au cours de la communication vocale, ou un résumé de ces données, peuvent être transmises au terminal sous la forme d'un message textuel. Une telle disposition permet à l'utilisateur du terminal de connaître le contexte de la communication et les données attendues par le serveur. Selon encore une réalisation particulière, les données déjà communiquées par le terminal au cours de la communication vocale sont retransmises sous la forme d'un message instantané reçu par le terminal TA.

Dans le contexte du présent exposé, le message de configuration émis par le serveur SI à l'établissement de la seconde communication peut être le suivant : « *Vous nous avez communiqué le numéro client suivant: 0123456789. A quel service souhaitez-vous accéder? « Service 1 » ou « Service 2 » ?* ».

Selon un mode de réalisation particulier, l'étape de configuration est au moins en partie réalisée pendant la phase d'établissement de la seconde communication. Précisément, une partie des informations de contexte peut être présentée à l'utilisateur durant la phase de présentation de la seconde communication sur le second terminal. Pour cela, les informations de contexte transmises peuvent être comprises dans un message SIP INVITE d'établissement de la seconde communication et présentées à l'utilisateur par le terminal afin que celui-ci puisse décider ou d'accepter la communication. Selon un mode de réalisation particulier, une partie de l'information de contexte est comprise dans le champ « from » du message INVITE, et en particulier, dans la partie « Display Name » du champ « from ». Le contenu du champ « Display Name » est généralement affiché par le terminal lorsque l'appel est présenté à l'utilisateur. Ainsi, le contexte est affiché sur l'écran du terminal à la place de l'identifiant de l'appelant lors de la présentation de l'appel, et l'utilisateur est informé du contexte avant d'accepter la communication

Le terminal TA reçoit un tel message à l'étape 404 et le restitue dans une interface de communication adaptée à l'étape 405. Lorsque le message est un signal audio, il est restitué par un haut-parleur du terminal. Lorsqu'il s'agit d'un message texte, il est restitué dans une interface de communication adaptée, comme par exemple une interface de messagerie instantanée.

Selon un mode de réalisation particulier, le procédé d'établissement comprend une étape d'adaptation du contexte transmis au terminal selon la modalité de la seconde communication. Par exemple, une indication invitant l'utilisateur à taper la commande désirée peut être ajoutée lorsque la seconde modalité de communication est une modalité textuelle.

Selon un mode particulier de réalisation, le procédé d'établissement comprend une étape 303 au cours de laquelle le serveur SI obtient les capacités de communication du terminal TA. Les capacités du terminal TA sont reçues dans un format conforme dans une section du message conforme à la norme SDP (IETF RFC4566 - SDP Session Description Protocol). Le serveur peut obtenir les capacités du terminal en réponse à un message SIP OPTIONS envoyé a terminal. En réponse à un tel message, le serveur reçoit l'ensemble des capacités du terminal TA dans un message SIP 200 OK. En variante, le serveur peut obtenir les capacités du terminal TA dans le message SIP INVITE d'établissement de la première communication. Les capacités de communication comprennent par exemple des formats de codage supportés ou des modalités de communication.

De façon correspondante, le procédé de bascule comprend, selon une réalisation particulière, une étape 401 de transmission de ses capacités de communication au serveur SI. Les capacités du terminal correspondent aux formats de codage et aux protocoles de communication supportés par exemple. Ces capacités peuvent être transmises par le terminal conformément à la norme SDP, par exemple dans un message d'initiation de session SIP INVITE, dans une réponse à un message SIP INVITE, ou en réponse à une requête SIP OPTIONS.

Selon un mode de réalisation particulier, l'identité publique mémorisée en association avec le contexte lors de l'étape 302 est un identifiant d'une ligne téléphonique partagée entre une pluralité de terminaux d'un utilisateur. Ainsi, la seconde communication peut être établie sur un terminal distinct du premier terminal, ce qui permet à un utilisateur de poursuivre une interaction débutée au téléphone à partir d'une tablette, sans en perdre le contexte.

Selon un mode particulier de réalisation, la première communication est déconnectée lorsque la seconde communication est établie. De cette façon, une seule modalité est disponible à la fois. Pour cela, le serveur SI émet un message de fin de communication à destination du terminal TA, comme par exemple un message SIP BYE. La première communication est ainsi terminée et les ressources associées sont libérées.

Selon une réalisation particulière, la première et la seconde communication restent établies simultanément. Ainsi, l'utilisateur du terminal TA peut à tout moment utiliser l'une ou l'autre des modalités pour interagir avec le serveur interactif SI. Pour cela, ni le terminal TA ni le serveur SI ne transmettent un message de fin de communication et la première communication n'est pas libérée.

Selon un mode particulier de réalisation, la première et la seconde communication restent établies simultanément et les messages émis par le serveur sont transmis au terminal dans la première et la seconde communication. Ainsi, lorsque le serveur SI transmet un message au terminal TA, par exemple un message invitant l'utilisateur à faire un choix, il est transmis sous une forme vocale via la première communication et sous forme textuelle vis la seconde communication. De même, lorsque l'utilisateur transmet une commande au serveur interactif au travers par exemple de la communication vocale et que cette commande provoque une transition d'état du service interactif, un message représentatif de la commande ayant causé la transition est transmis via la seconde communication. Ainsi, l'utilisateur dispose à tout moment sur l'interface de communication textuelle d'un historique des commandes transmises via la communication vocale. A l'inverse, des commandes transmises via une communication textuelle peuvent être synthétisés vocalement par le serveur et transmis au terminal dans la communication vocale.

Pour cela, le serveur peut mettre en œuvre un module de conversion ou d'adaptation configuré pour recevoir les commandes en provenance du terminal via une première communication, et lorsque la commande provoque une transition d'état ou qu'elle comporte une donnée particulière transmise au serveur par le terminal, pour la retransmettre au terminal à travers une seconde communication dans une forme adaptée à la modalité de la seconde communication.

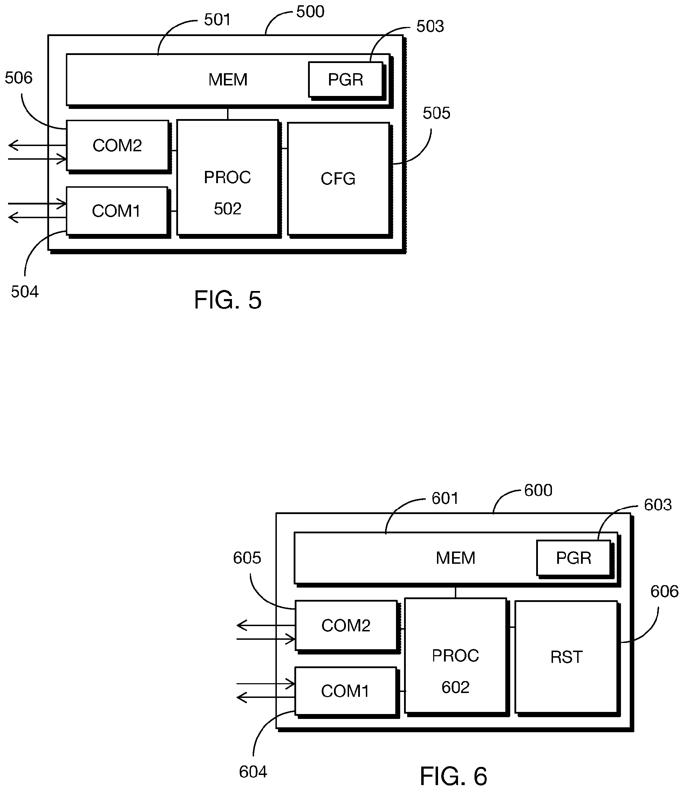

La figure 5 illustre l'architecture d'un dispositif 500 adapté pour mettre en œuvre le procédé d'établissement selon un mode particulier de réalisation.

Le dispositif comprend un espace de stockage 501, par exemple une mémoire MEM, une unité de traitement 502 équipée par exemple d'un processeur PROC. L'unité de traitement peut être pilotée par un programme 503, par exemple un programme d'ordinateur PGR, mettant en œuvre le procédé d'établissement selon les différents modes de réalisation décrits dans le présent document, et notamment les étapes d'obtention d'une commande d'établissement d'une seconde communication selon une seconde modalité, de mémorisation d'un contexte représentatif des interactions ayant eu lieu entre le terminal et le serveur interactif au cours la première communication en association avec une identité publique, le contexte comprenant au moins un état occupé par le serveur interactif au cours de la première communication, d'établissement d'une seconde communication selon une seconde modalité vers un terminal destinataire désigné par l'identité publique mémorisée, et de configuration de la seconde communication à partir du contexte mémorisé.

À l'initialisation, les instructions du programme d'ordinateur 503 sont par exemple chargées dans une mémoire RAM (Random Access Memory) avant d'être exécutées par le processeur de l'unité de traitement 502. Le processeur de l'unité de traitement 502 met en œuvre les étapes du procédé d'établissement selon les instructions du programme d'ordinateur 503.

Pour cela, le dispositif comprend un module de communication (504) adapté pour établir une première communication avec un terminal selon une première modalité, comme par exemple une communication vocale ou textuelle, et pour obtenir une commande d'établissement d'une seconde communication selon une seconde modalité. Il s'agit par exemple d'une interface réseau configurée pour établir des communications au travers d'un réseau IMS, d'une interface de communication Ethernet, RTC, 2G, 3G ou 4G.

La mémoire 501 du dispositif 500 est en outre adaptée pour mémoriser un contexte représentatif des interactions ayant eu lieu entre le terminal et le dispositif au cours de la première communication en association avec une identité publique, le contexte comprenant au moins un état occupé par le dispositif au cours de la première communication. Les données de contexte peuvent également être mémorisée dans une mémoire distincte de la mémoire 501, par exemple dans une base de données associée au dispositif et accessible via des requêtes de type SQL par exemple.

Le dispositif comprend aussi un module de communication 506 adapté pour établir une seconde communication selon une seconde modalité avec un terminal destinataire désigné par l'identité publique mémorisée. Il s'agit par exemple d'une interface réseau configurée pour établir des communications au travers d'un réseau IMS, d'une interface de communication Ethernet, RTC, 2G, 3G ou 4G. Selon une réalisation particulière, l'interface de communication 504 est combinée avec l'interface de communication 506.

Le dispositif comporte enfin un module de configuration 505 adapté pour configurer la seconde communication à partir du contexte mémorisé. Un tel module de configuration peut être mis en œuvre par un processeur configuré par des instructions adaptées pour transmettre à un terminal destinataire de la seconde communication des données représentatives du contexte mémorisé dans la mémoire 501. Par exemple, le module 505 peut adapter et transmettre un historique des messages échangés depuis le début de la première communication.

Selon un mode de réalisation particulier, un tel dispositif est intégré dans un serveur interactif vocal ou un agent conversationnel (chatbot).

La figure 6 illustre l'architecture d'un dispositif 600 adapté pour mettre en œuvre le procédé de bascule selon un mode particulier de réalisation.

Le dispositif comprend un espace de stockage 601, par exemple une mémoire MEM, une unité de traitement 602 équipée par exemple d'un processeur PROC. L'unité de traitement peut être pilotée par un programme 603, par exemple un programme d'ordinateur PGR, mettant en œuvre le procédé de bascule selon les différents modes de réalisation décrits dans le présent document, et notamment les étapes d'établissement d'une première communication avec un serveur interactif selon une première modalité, d'envoi vers le serveur d'une commande de basculement vers une seconde communication selon une seconde modalité, de réception d'un message d'établissement d'une seconde communication entre le serveur interactif et le terminal selon une seconde modalité, de réception d'au moins un message représentatif des interactions ayant eu lieu entre le terminal et le serveur interactif durant la première communication et de restitution du message représentatif reçu.

À l'initialisation, les instructions du programme d'ordinateur 603 sont par exemple chargées dans une mémoire RAM (Random Access Memory) avant d'être exécutées par le processeur de l'unité de traitement 602. Le processeur de l'unité de traitement 602 met en œuvre les étapes du procédé de bascule selon les instructions du programme d'ordinateur 603.

Pour cela, le dispositif comprend un module de communication 605 tel que par exemple une interface réseau Ethernet, RTC, 2G, 3G, 4G ou WiFi. Le module 605 est en particulier adapté pour établir une première communication selon une première modalité avec un serveur interactif. Par exemple, le module 605 est configuré pour établir une communication vocale avec un serveur interactif selon le protocole SIP, ou une communication selon une modalité textuelle conforme à la norme RCS.

Le dispositif comporte également un module de communication 604 adapté pour transmettre à destination du serveur interactif une commande d'établissement d'une seconde communication selon une seconde modalité et recevoir un message d'établissement d'une seconde communication entre le serveur interactif et le dispositif selon une seconde modalité. Il s'agit par exemple d'interface réseau Ethernet, RTC, 2G, 3G, 4G ou WiFi.

Le module de communication 604 est en outre adapté pour recevoir au moins un message comprenant un contexte représentatif des interactions ayant eu lieu entre le dispositif et le serveur interactif au cours la première communication. Pour cela, le module de communication met en œuvre au moins un protocole de communication, tel que le protocole SIP par exemple.

Selon une réalisation particulière, les modules de communication 604 et 605 correspondent à une seule interface réseau.

Le dispositif comporte enfin un module de restitution 606. Le module de restitution est configuré pour restituer le contexte représentatif des interactions ayant eu lieu entre le dispositif et le serveur interactif au cours de la première communication reçu par le module de communication 604. Il s'agit par exemple d'un écran associé à une interface graphique adaptée pour échanger des messages instantanés, ou d'un haut-parleur adapté pour décoder et restituer un signal audio reçu par une interface de communication.

Selon un mode particulier de réalisation, le dispositif est intégré dans un terminal de communication de type smartphone, tablette, un objet connecté ou un ordinateur personnel.

### ANNEXE

```
 <form id="getClientNumber">
    <field name="ClientNumber">
    <prompt>
         Quel est votre numéro de client?
         </prompt>
    <grammar src="clientNum.grxml" type="application/srgs+xml" />
    <goto next=#selectService > />
    </field>
    </form>
    <menu id="selectService">
    <field name="SelectService">
    <prompt>
        A quel service souhaitez-vous accéder? <enumerate/>
    </prompt>
    <choice next=sl.vxml">
         <grammar src="sl.grxml" type="application/srgs+xml" />
         Service 1
    </choice>
    <choice next="s2.vxml">
         <grammar src="s2.grxml" type="application/srgs+xml" />
         Service 2
    </choice>
    </field>
    </menu>
```

## Revendications

1. Procédé d'établissement d'une seconde communication selon une seconde modalité à partir d'une première communication établie (300) selon une première modalité entre un terminal de communication et un serveur interactif, le serveur interactif étant adapté pour réagir, selon une logique prédéfinie, à des commandes reçues en provenance du terminal, la logique étant prédéfinie par un ensemble d'états et par des conditions de transitions entre lesdits états, le procédé comprenant les étapes suivantes réalisée par le serveur :
- obtention, (301) d'une commande d'établissement d'une seconde communication selon une seconde modalité,
- mémorisation (302) d'un contexte représentatif des interactions ayant eu lieu entre le terminal et le serveur interactif au cours de la première communication et d'une identité publique, le contexte mémorisé comprenant au moins un historique des états successivement occupés par le serveur interactif au cours de la première communication,
- établissement (304) d'une seconde communication selon une seconde modalité vers un terminal destinataire désigné par l'identité publique mémorisée, et
- configuration (305) de la seconde communication par la transmission vers le terminal destinataire, via la seconde communication et sous une forme adaptée à la seconde modalité, d'au moins une partie du contexte mémorisé.

2. Procédé selon l'une quelconque des revendications précédentes dans lequel le contexte mémorisé comprend en outre un historique des transitions ayant mené aux états de l'historique des états.

3. Procédé selon l'une quelconque des revendications précédentes dans lequel la première communication est établie selon une modalité vocale, la seconde communication étant établie selon une modalité textuelle.

4. Procédé selon l'une quelconque des revendications 1 à 3 dans lequel la première communication est établie selon une modalité textuelle, la seconde communication étant établie selon une modalité vocale.

5. Procédé selon l'une quelconque des revendications précédentes comprenant une étape de contrôle qu'une communication selon une seconde modalité est possible entre le serveur et le terminal destinataire.

6. Procédé selon l'une quelconque des revendications précédentes dans lequel la première communication est maintenue suite à l'établissement de la seconde communication, les messages émis par le serveur étant transmis via la première et la seconde communication.

7. Procédé selon l'une quelconque des revendications précédentes dans lequel la seconde communication est établie avec un terminal destinataire distinct du terminal avec lequel la première communication est établie.

8. Procédé de bascule d'une seconde communication selon une seconde modalité à partir d'une première communication établie (400) selon une première modalité entre un terminal de communication et un serveur interactif, le serveur interactif étant adapté pour réagir à des commandes émises par le terminal selon une logique prédéfinie, le procédé comprenant les étapes suivantes réalisées par le terminal :
- envoi (401) vers le serveur d'une commande de basculement vers une seconde communication selon une seconde modalité,
- réception (403) d'un message d'établissement d'une seconde communication entre le serveur interactif et le terminal selon une seconde modalité,
- réception (404) d'au moins une partie d'un contexte mémorisé comprenant au moins un historique des états successivement occupés par le serveur interactif au cours de la première communication avec le terminal, et
- restitution (405) via la seconde communication et sous une forme adaptée à la seconde modalité, d'au moins une partie du contexte mémorisé reçu.

9. Dispositif d'établissement d'une seconde communication selon une seconde modalité à partir d'une première communication établie selon une première modalité entre un terminal de communication et le dispositif, le dispositif étant adapté pour réagir, selon une logique prédéfinie, à des commandes reçues en provenance du terminal, la logique étant prédéfinie par un ensemble d'états et par des conditions de transitions entre lesdits états, le dispositif étant **caractérisé en ce qu'**il comporte:
- un module de communication (504) adapté pour obtenir une commande d'établissement d'une seconde communication selon une seconde modalité,
- une mémoire (501) adaptée pour mémoriser un contexte représentatif des interactions ayant eu lieu entre le terminal et le dispositif au cours de la première communication et d'une identité publique, le contexte mémorisé comprenant au moins un historique des états successivement occupés par le serveur interactif au cours de la première communication,
- un module de communication (506) adapté pour établir une seconde communication selon une seconde modalité avec un terminal destinataire désigné par l'identité publique mémorisée, et
- un module de configuration (505) adapté pour configurer la seconde communication par la transmission vers le terminal destinataire, via la seconde communication et sous une forme adaptée à la seconde modalité, d'au moins une partie du contexte mémorisé.

10. Dispositif de bascule entre une première communication établie selon une première modalité avec un serveur interactif et une seconde communication établie selon une seconde modalité avec le serveur interactif, le serveur interactif étant adapté pour réagir selon une logique prédéfinie à des commandes émises par le dispositif, le dispositif comprenant :
- un module de communication (604) adapté pour transmettre à destination du serveur interactif une commande d'établissement d'une seconde communication selon une seconde modalité,
- le module de communication (604) étant également adapté pour recevoir un message d'établissement d'une seconde communication entre le serveur interactif et le dispositif selon une seconde modalité,
- le module de communication (604) étant en outre adapté pour recevoir au moins une partie d'un contexte mémorisé comprenant au moins un historique des états successivement occupés par le serveur interactif au cours de la première communication avec le terminal, et
- un module de restitution (606) adapté pour restituer via la seconde communication et sous une forme adaptée à la seconde modalité, au moins une partie du contexte mémorisé..

11. Serveur interactif comprenant un dispositif d'établissement selon la revendication 9.

12. Terminal de communication comprenant un dispositif de bascule selon la revendication 10.

13. Support d'informations lisible par un processeur sur lequel est enregistré un programme d'ordinateur comprenant des instructions pour l'exécution des étapes du procédé d'établissement selon l'une des revendications 1 à 7 et/ou les instructions pour l'exécution du procédé de bascule selon la revendication 8.

## Patentansprüche

1. Verfahren zum Aufbau einer zweiten Kommunikation gemäß einer zweiten Modalität ausgehend von einer ersten Kommunikation, die gemäß einer ersten Modalität zwischen einem Kommunikationsendgerät und einem interaktiven Server aufgebaut (300) wurde, wobei der interaktive Server dazu angepasst ist, gemäß einer vordefinierten Logik auf Befehle zu reagieren, die von dem Endgerät empfangen werden, wobei die Logik durch einen Satz Zustände und durch Übergangsbedingungen zwischen den Zuständen vordefiniert ist, wobei das Verfahren die folgenden Schritte beinhaltet, die von dem Server durchgeführt werden:
- Erhalten (301) eines Befehls zum Aufbau einer zweiten Kommunikation gemäß einer zweiten Modalität,
- Speichern (302) eines Kontexts, der für die Interaktionen, die zwischen dem Endgerät und dem interaktiven Server während der ersten Kommunikation stattgefunden haben, repräsentativ ist, und einer öffentlichen Kennung, wobei der gespeicherte Kontext mindestens eine Historie der Zustände, die während der ersten Kommunikation von dem interaktiven Server nacheinander eingenommen wurden, beinhaltet,
- Aufbauen (304) einer zweiten Kommunikation gemäß einer zweiten Modalität mit einem Zielendgerät, das durch die gespeicherte öffentliche Kennung bestimmt wird, und
- Konfigurieren (305) der zweiten Kommunikation durch das Übertragen, an das Zielendgerät, über die zweite Kommunikation und in einer an die zweite Modalität angepassten Form, mindestens eines Teils des gespeicherten Kontexts.

2. Verfahren nach einem der vorhergehenden Ansprüche, wobei der gespeicherte Kontext ferner eine Historie der Übergänge beinhaltet, die zu den Zuständen der Historie der Zustände geführt hat.

3. Verfahren nach einem der vorhergehenden Ansprüche, wobei die erste Kommunikation gemäß einer Sprachmodalität aufgebaut wird, wobei die zweite Kommunikation gemäß einer Textmodalität aufgebaut wird.

4. Verfahren nach einem der Ansprüche 1 bis 3, wobei die erste Kommunikation gemäß einer Textmodalität aufgebaut wird, wobei die zweite Kommunikation gemäß einer Sprachmodalität aufgebaut wird.

5. Verfahren nach einem der vorhergehenden Ansprüche, beinhaltend einen Schritt des Überprüfens, ob eine Kommunikation gemäß einer zweiten Modalität zwischen dem Server und dem Zielendgerät möglich ist.

6. Verfahren nach einem der vorhergehenden Ansprüche, wobei die erste Kommunikation im Anschluss an den Aufbau der zweiten Kommunikation aufrechterhalten wird, wobei die von dem Server übermittelten Nachrichten über die erste und die zweite Kommunikation übertragen werden.

7. Verfahren nach einem der vorhergehenden Ansprüche, wobei die zweite Kommunikation mit einem Zielendgerät aufgebaut wird, das sich von dem Endgerät, mit dem die erste Kommunikation aufgebaut wird, unterscheidet.

8. Verfahren zur Umschaltung einer zweiten Kommunikation gemäß einer zweiten Modalität ausgehend von einer ersten Kommunikation, die gemäß einer ersten Modalität zwischen einem Kommunikationsendgerät und einem interaktiven Server aufgebaut (400) wurde, wobei der interaktive Server dazu angepasst ist, gemäß einer vordefinierten Logik auf Befehle zu reagieren, die von dem Endgerät übermittelt werden, wobei das Verfahren die folgenden Schritte beinhaltet, die von dem Endgerät durchgeführt werden:
- Senden (401), an den Server, eines Befehls zum Umschalten auf eine zweite Kommunikation gemäß einer zweiten Modalität,
- Empfangen (403) einer Nachricht über den Aufbau einer zweiten Kommunikation zwischen dem interaktiven Server und dem Endgerät gemäß einer zweiten Modalität,
- Empfangen (404) mindestens eines Teils eines gespeicherten Kontexts, der mindestens eine Historie der Zustände, die während der ersten Kommunikation mit dem Endgerät von dem interaktiven Server nacheinander eingenommen wurden, beinhaltet, und
- Wiederherstellen (405), über die zweite Kommunikation und in einer an die zweite Modalität angepassten Form, mindestens eines Teils des empfangenen gespeicherten Kontexts.

9. Vorrichtung zum Aufbau einer zweiten Kommunikation gemäß einer zweiten Modalität ausgehend von einer ersten Kommunikation, die gemäß einer ersten Modalität zwischen einem Kommunikationsendgerät und der Vorrichtung aufgebaut wurde, wobei die Vorrichtung dazu angepasst ist, gemäß einer vordefinierten Logik auf Befehle zu reagieren, die von dem Endgerät empfangen werden, wobei die Logik durch einen Satz Zustände und durch Übergangsbedingungen zwischen den Zuständen vordefiniert ist, wobei die Vorrichtung **dadurch gekennzeichnet ist, dass** sie Folgendes umfasst:
- ein Kommunikationsmodul (504), das dazu angepasst ist, einen Befehl zum Aufbau einer zweiten Kommunikation gemäß einer zweiten Modalität zu erhalten,
- einen Speicher (501), der dazu angepasst ist, einen Kontext, der für die Interaktionen, die zwischen dem Endgerät und der Vorrichtung während der ersten Kommunikation stattgefunden haben, repräsentativ ist, und eine öffentliche Kennung zu speichern, wobei der gespeicherte Kontext mindestens eine Historie der Zustände, die während der ersten Kommunikation von dem interaktiven Server nacheinander eingenommen wurden, beinhaltet,
- ein Kommunikationsmodul (506), das dazu angepasst ist, eine zweite Kommunikation gemäß einer zweiten Modalität mit einem Zielendgerät, das durch die gespeicherte öffentliche Kennung bestimmt wird, aufzubauen, und
- ein Konfigurationsmodul (505), das dazu angepasst ist, die zweite Kommunikation durch das Übertragen, an das Zielendgerät, über die zweite Kommunikation und in einer an die zweite Modalität angepassten Form, mindestens eines Teils des gespeicherten Kontexts zu konfigurieren.

10. Vorrichtung zur Umschaltung zwischen einer ersten Kommunikation, die gemäß einer ersten Modalität mit einem interaktiven Server aufgebaut wird, und einer zweiten Kommunikation, die gemäß einer zweiten Modalität mit dem interaktiven Server aufgebaut wird, wobei der interaktive Server dazu angepasst ist, gemäß einer vordefinierten Logik auf Befehle zu reagieren, die von der Vorrichtung übermittelt werden, wobei die Vorrichtung Folgendes beinhaltet:
- ein Kommunikationsmodul (604), das dazu angepasst ist, einen Befehl zum Aufbau einer zweiten Kommunikation gemäß einer zweiten Modalität an den interaktiven Server zu übertragen,
- ein Kommunikationsmodul (604), das ebenfalls dazu angepasst ist, eine Nachricht über den Aufbau einer zweiten Kommunikation zwischen dem interaktiven Server und der Vorrichtung gemäß einer zweiten Modalität zu empfangen,
- wobei das Kommunikationsmodul (604) ferner dazu angepasst ist, mindestens einen Teil eines gespeicherten Kontexts zu empfangen, der mindestens eine Historie der Zustände, die während der ersten Kommunikation mit dem Endgerät von dem interaktiven Server nacheinander eingenommen wurden, beinhaltet, und
- ein Wiederherstellungsmodul (606), das dazu angepasst ist, über die zweite Kommunikation und in einer an die zweite Modalität angepassten Form mindestens einen Teil des gespeicherten Kontexts wiederherzustellen.

11. Interaktiver Server, der eine Aufbauvorrichtung nach Anspruch 9 beinhaltet.

12. Kommunikationsendgerät, das eine Umschaltungsvorrichtung nach Anspruch 10 beinhaltet.

13. Von einem Prozessor lesbarer Informationsträger, auf dem ein Computerprogramm aufgezeichnet ist, das Anweisungen zur Ausführung der Schritte des Aufbauverfahrens nach einem der Ansprüche 1 bis 7 und/oder die Anweisungen zur Ausführung des Umschaltungsverfahrens nach Anspruch 8 beinhaltet.

## Claims

1. Method for setting up a second communication according to a second modality on the basis of a first communication (300) set up, according to a first modality, between a communication terminal and an interactive server, the interactive server being able to react, according to a predefined logic, to received commands originating from the terminal, the logic being predefined by a set of states and by conditions of transitions between said states, the method comprising the following steps carried out by the server:
- obtainment (301) of a command to set up a second communication according to a second modality,
- storage (302) of a context representative of the interactions that have taken place between the terminal and the interactive server in the course of the first communication and of a public identity, the stored context comprising at least one state history containing the states successively occupied by the interactive server in the course of the first communication,
- set-up (304) of a second communication according to a second modality with a recipient terminal designated by the stored public identity, and
- configuration (305) of the second communication by transmission, to the recipient terminal, via the second communication and in a form suitable for the second modality, of at least one portion of the stored context.

2. Method according to any one of the preceding claims, wherein the stored context furthermore comprises a history of the transitions that led to the states of the state history.

3. Method according to any one of the preceding claims, wherein the first communication is set up according to a voice modality, the second communication being set up according to a text modality.

4. Method according to any one of claims 1 to 3, wherein the first communication is set up according to a text modality, the second communication being set up according to a voice modality.

5. Method according to any one of the preceding claims, comprising a step of checking that a communication according to a second modality is possible between the server and the recipient terminal.

6. Method according to any one of the preceding claims, wherein the first communication is maintained subsequent to the set-up of the second communication, the messages sent by the server being transmitted via the first and the second communication.

7. Method according to any one of the preceding claims, wherein the second communication is set up with a recipient terminal distinct from the terminal with which the first communication was set up.

8. Method for switching to a second communication according to a second modality from a first communication (400) set up, according to a first modality, between a communication terminal and an interactive server, the interactive server being able to react to commands sent by the terminal according to a predefined logic, the method comprising the following steps carried out by the terminal:
- dispatch (401) to the server of a command to switch to a second communication according to a second modality,
- reception (403) of a message to set up a second communication between the interactive server and the terminal according to a second modality,
- reception (404) of at least one portion of a stored context comprising at least one state history containing the states successively occupied by the interactive server in the course of the first communication with the terminal, and
- rendition (405), via the second communication and in a form suitable for the second modality, of at least one portion of the stored context received.

9. Device for setting up a second communication according to a second modality on the basis of a first communication set up, according to a first modality, between a communication terminal and the device, the device being able to react, according to a predefined logic, to received commands originating from the terminal, the logic being predefined by a set of states and by conditions of transitions between said states, the device being **characterized in that** it comprises:
- a communication module (504) able to obtain a command to set up a second communication according to a second modality,
- a memory (501) able to store a context representative of the interactions that have taken place between the terminal and the device in the course of the first communication and of a public identity, the stored context comprising at least one state history containing the states successively occupied by the interactive server in the course of the first communication,
- a communication module (506) able to set up a second communication according to a second modality with a recipient terminal designated by the stored public identity, and
- a configuration module (505) able to configure the second communication by transmission, to the recipient terminal, via the second communication and in a form suitable for the second modality, of at least one portion of the stored context.

10. Device for switching between a first communication set up, according to a first modality, with an interactive server and a second communication set up, according to a second modality, with the interactive server, the interactive server being able to react according to a predefined logic to commands sent by the device, the device comprising:
- a communication module (604) able to transmit to the interactive server a command to set up a second communication according to a second modality,
- the communication module (604) also being able to receive a message to set up a second communication between the interactive server and the device according to a second modality,
- the communication module (604) furthermore being able to receive at least one portion of a stored context comprising at least one state history containing the states successively occupied by the interactive server in the course of the first communication with the terminal, and
- a rendition module (606) able to render, via the second communication and in a form suitable for the second modality, at least one portion of the stored context.

11. Interactive server comprising a setting-up device according to Claim 9.

12. Communication terminal comprising a switching device according to Claim 10.

13. Data medium readable by a processor on which is stored a computer program comprising instructions for executing the steps of the setting-up method according to one of Claims 1 to 7 and/or the instructions for executing the switching method according to Claim 8.
